# EUROPÄISCHE PATENTSCHRIFT

(11) **EP 0 653 478 B1**
(45) Veröffentlichungstag und Bekanntmachung des Hinweises auf die Patenterteilung: **10.06.1998**
(21) Anmeldenummer: 94116140.8
(22) Anmeldetag: 13.10.1994
(51) Int. Cl.: C10J 3/66, C10B 53/00

(54) **Verfahren und Anlage zur thermischen Verwertung von Abfallstoffen**
Process and installation for thermal utilisation of waste
Procédé et installation pour l'utilisation thermique de déchets

(30) Priorität: 15.11.1993 DE 4338927
(43) Veröffentlichungstag der Anmeldung: 17.05.1995
(73) Patentinhaber: Jungk, Klaus, 51143 Köln (DE)
(72) Erfinder: Jungk, Klaus, 51143 Köln (DE)

(56) Entgegenhaltungen:
- EP-A- 0 485 255
- EP-A- 0 545 241
- WO-A-94/21751
- US-A- 4 066 024
- US-A- 4 069 024

## Beschreibung

Die Erfindung bezieht sich auf ein Verfahren und eine Anlage zur thermischen Verwertung von Abfallstoffen aus getrennten Sammlungen wie Hausmüll, Gewerbemüll, Altreifen, Kunststoffabfällen, Schlämme wie Klärschlamm oder dergleichen, wobei die Abfallstoffe in einer ersten thermischen Stufe in einem Drehrohrofen verschwelt werden und die bei der Schwelung erhaltenen Produkte zumindest teilweise weiter thermisch behandelt werden.

Die Beseitigung von organische und anorganische Bestandteile enthaltenden Abfallstoffen in einer umweltschonenden Weise stellt ein großes und immer dringender zu lösendes Problem dar.

Ein bekannter Verfahrensweg besteht darin, durch eine Verschwelung (Pyrolyse) der Abfallstoffe Schwelgase und einen Schwelreststoff zu erzeugen und die Schwelgase einer weiteren thermischen Behandlung zuzuführen. So wird in der EP-PS 0 152 912 ein Verfahren zur Erzeugung von brennbaren Gasen aus Abfallstoffen beschrieben, bei dem die Abfallstoffe in einem Drehreaktor (Drehrohr) verschwelt, die Schwelgase nach einer Gasreinigung bei Temperaturen von 800 bis 1200 °C teilweise verbrannt und dann durch eine glühende Schicht von stückigen Feststoffen zum Zwecke des Krackens geleitet werden und bei dem die Schwelrückstände (Schwelkoks) einer mechanischen Aufbereitung durch Siebung unterzogen und dann deponiert werden.

Aus der DE-Z "Müll und Abfall" 8/1993, Seiten 570 bis 572 ist weiterhin ein "Schwel-Brenn-Verfahren" zur thermischen Entsorgung von Abfällen wie Hausmüll und Klärschlamm bekannt, bei dem die Abfälle in einer Drehtrommel bei ca. 450 °C verschwelt werden. Das Schwelgas wird direkt einer Brennkammer zugeführt, während der Schwelreststoff zunächst durch eine mechanische Aufbereitung von ferritischen Metallen, Nichteisenmetallen und inertem Material wie Glas, Keramik und Stein befreit und dann gleichfalls der Brennkammer zugeführt wird. Die Temperatur der Brennkammer beträgt ca. 1300 °C, sie ist damit höher als der Schmelzpunkt der Verbrennungsaschc so daß diese in schmelzflüssigem Zustand aus der Brennkammer ausgetragen wird.

Bei den bekannten Verfahren wird somit der bei der Schwelung erhaltene feste Reststoff entweder deponiert oder aber gemeinsam mit den Schwelgasen in einer weiteren thermischen Verfahrensstufe verbrannt.

Es ist Aufgabe der Erfindung, die bekannten Verfahren bzw. Anlagen zur thermischen Verwertung von Abfallstoffen so weiterzubilden, daß eine besonders gute Ausnutzung des Energieinhaltes der Abfallstoffe ohne ausschließliche Verbrennung der gesamten Abfallstoffe ermöglicht wird.

Die gestellte Aufgabe wird verfahrensmäßig gelöst mit den Maßnahmen des Kennzeichnungsteils des Anspruchs 1 und anlagenmäßig mit den Merkmalen des Kennzeichnungsteils des Anspruchs 7. Vorteilhafte Ausgestaltungen der Erfindung sind in den Unteransprüchen angegeben.

Inhalt der Erfindung ist die Erzeugung von hochwertigem Synthesegas aus Abfallstoffen durch Kombination einer Schwelung mit einer Hochtemperaturvergasung, wodurch die in den Abfallstoffen enthaltenen Energieträger vollständig verwertet und wobei die verbleibende Reststoffe teilweise einer Wertstoffaufbereitung zugeführt und teilweise zu einer glasigen laugungsresistenten Schlacke umgewandelt werden.

Zunächst werden die Abfallstoffe - außer Klärschlamm - einer Grobzerkleinerung unterworfen und in einem direkt beheizten Drehrohrofen verschwelt. Im Drehrohrofen befindet sich ein Tauchbett aus bereits aufbereiteten feinkörnigen Schwelreststoffen, in das die Abfallstoffe eintauchen und so, trotz der direkten Beheizung des Drehrohrofens, nahezu ohne Sauerstoffzufuhr verschwelen. Die Temperatur bei der Schwelung beträgt 450 bis 600 °C, kann aber bei Bedarf auch bis zu 1200 °C betragen. Die zur Aufrechterhaltung der Schwelung erforderliche Energie wird in den Drehrohrofen durch Verbrennung einer Teilmenge des erzeugten Synthesegases mit vorgewärmter Verbrennungsluft sowie durch das heiße Tauchbett aus Schwelreststoffen, die ungekühlt aus der Aufbereitung dem Drehrohrofen zugeführt werden, eingebracht.

Der Drehrohrofen wird im Gleichstrombetrieb gefahren, d. h. Abfallstoffe, Tauchbett und Brenngase durchwandern den Drehrohrofen in gleicher Richtung, wodurch eine besonders spontane Erwärmung der Abfallstoffe erreicht und eine kürzere Bauweise des Drehrohrofens ermöglicht werden.

Die bei der Schwelung der Abfallstoffe freigesetzten Schwelgase werden in einer thermischen Nachverbrennungsvorrichtung verbrannt und die hierbei anfallende Wärmeenergie in einem Abhitzekessel zur Erzeugung von Dampf mit beispielsweise anschließender Verstromung genutzt.

In einem dieser Nachverbrennungsvorrichtung nachgeschalteten Luftvorwärmer wird die Restenergie der Verbrennungsgase zur Vorwärmung der Verbrennungsluft für den Drehrohrofen und für die Nachverbrennungsvorrichtung verwendet. Anschließend passieren die auf diese Weise gekühlten Verbrennungsgase eine Abgasreinigung.

Die aus dem Drehrohrofen ausgetragenen Feststoffe werden zunächst durch Absiebung von einer Grobfraktion getrennt. Diese Grobfraktion, sie besteht überwiegend aus Eisenmetallen, Nichteisenmetallen, Glas, Keramik und Steine, wird zur weiteren Aufbereitung einer an sich bekannten Aufbereitungsanlage zugeführt.

Aus der verbleibenden Feinfraktion wird zunächst metallisches Eisen durch eine Magnetscheidung abgetrennt, dann wird sie einem Sieb mit kleinerer Maschenweite zugeführt. Die bei diesem Sieb erhaltene Grobfraktion wird zerkleinert und dann erneut dem Sieb aufgegeben, während die Feinfraktion auf einem noch feineren Sieb auf die Aufgabekorngröße für einen Zyklonvergaser abgesiebt wird.

Die bei diesem letzten Sieb erhaltene Grobfraktion wird teilweise zur Bildung des Tauchbettes zum Drehrohrofen zurückgeführt, die Restmenge wird nach einer Zerkleinerung zum Sieb zurückgeführt.

Die auf diese Weise erhaltene Feinfraktion wird nun gemeinsam mit Verbrennungssauerstoff als Trägermedium tangential in einen Vergasungszyklon eingedüst. Der Vergasungszyklon wird über die Sauerstoffzufuhr so geregelt, daß eine schmelzflüssige Schlacke und ein hochwertiges, nahezu stickstofffreies und durch die vorhergehende Schwelung teerfreies Synthesegase gebildet werden. Das Synthesegas durchläuft noch eine Kühl- und Reinigungsstufe und wird dann zur weiteren Verwendung aus der Anlage abgeführt, wobei eine Teilmenge zur Beheizung des Drehrohrofens und eine weitere Teilmenge zur Aufrechterhaltung der Nachverbrennung der Schwelgase verwendet werden. Die bei der Vergasung anfallende schmelzflüssige Schlacke ist laugungsresistent und kann beispielsweise als Baustoff verwendet oder zu Steinwolle verarbeitet werden.

Weitere Einzelheiten, Vorteile und Merkmale der Erfindung werden nachfolgend an einem Ausführungsbeispiel anhand einer Zeichnungsfigur näher erläutert.

Schlammförmige Abfallstoffe (11) und feste Abfallstoffe (10), letztere nach einer vorhergehenden Grobzerkleinerung in einer Vorzerkleinerungsvorrichtung (12), werden einem direkt beheizten Drehrohrofen (13), der im Gleichstromverfahren betrieben wird, aufgegeben. Im Drehrohrofen (13) befindet sich ein Tauchbett aus feinkörnigen aufbereiteten Schwelreststoffen (34), beispielsweise mit der Körnung 1 bis 2, in die die festen Abfallstoffe (10) eintauchen und die gleichzeitig ein Mischbett für die eingedüsten Schlämme (11) bilden. Die das Tauchbett bildenden feinkörnigen aufbereiteten Schwelreststoffe (34) werden ungekühlt im Gleichstrom mit den zu schwelenden Abfallstoffen (10, 11) dem Drehrohrofen (13) aufgegeben, so daß in Verbindung mit der Gleichstrom-Gasführung der Verbrennungsgase eine spontane Erwärmung der Abfallstoffe erfolgt. Die durch die Schwelung freigesetzten Schwelgase verbrennen oberhalb des Tauchbettes und halten einen nahezu autarken Betrieb des Schwelvorgangs aufrecht, der im Bedarfsfall aber durch zusätzliche Verbrennung von erzeugtem Synthesegas (37) mit vorgewärmter Verbrennungsluft (39) unterstützt werden kann. Innerhalb des Drehrohrofen (13) sorgt das vorhandene Tauchbett dafür, daß nur die Schwelgase verbrennen, während die Abfallstoffe (10, 11) durch das Tauchbett vor einem Kontakt mit Verbrennungssauerstoff weitgehend geschützt bleiben.

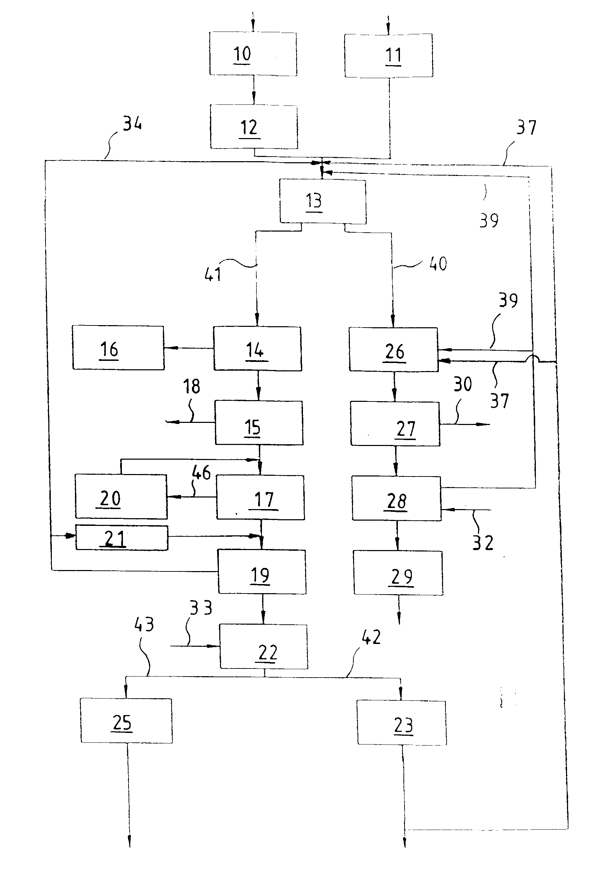

Das den Drehrohrofen (13) verlassende Schwelgas (40) enthält noch unverbrannte Anteile und wird deshalb zu einer Nachverbrennungsvorrichtung (26) geführt und dort mit Hilfe von Synthesegase (37) und vorgewärmter Verbrennungsluft (39) verbrannt. Das die Nachverbrennungsvorrichtung (26) verlassende heiße Verbrennungsgas wird zu einem Abhitzekessel (27) geleitet, in dem ein Teil der Wärmeenergie des Verbrennungsgases zur Erzeugung von Dampf (30) und möglicher Verstromung (in der Zeichnung nicht dargestellt) verwendet wird. Ein diesem Abhitzekessel (27) nachgeschalteter Luftvorwärmer (28) wärmt Frischluft (32) mit Hilfe der in den Verbrennungsgasen noch verbliebenen Restwärmemenge auf. Die vorgewärmte Luft wird dann als Verbrennungsluft (39) zum Drehrohrofen (13) und zur Nachverbrennungsvorrichtung (26) geleitet. Den Abschluß bildet dann eine Rauchgasreinigung (29), die noch vorhandene Schadstoffe aus den Verbrennungsgasen entfernt.

Das nach der Schwelung aus dem Drehrohrofen (13) ausgetragene Gemisch (41) aus Schwelreststoffen und einer Teilmenge des Tauchbettes wird im heißen Zustand zunächst bei beispielsweise 5 mm auf einem Sieb (14) vom vorhandenen Grobgut abgetrennt, das dann in einer an sich bekannten und deshalb hier nicht näher beschriebenen Wertstoffaufbereitungsanlage (16) weiterverabeitet wird. Das nach der Absiebung verbleibende Feingut < 5 mm wird durch einen Magnetscheider (15) von metallischem Eisen (18) getrennt und dann bei einer kleineren Korngröße auf einem Sieb (17) gesiebt, beispielsweise bei einer Korngröße von 2 mm. Das erhaltene Überkorn (46) > 2 mm wird einer Zerkleinerungsvorrichtung (20) zugeführt und dann zum Sieb (17) zurückgeführt. Das am Sieb (17) erhaltene Siebfeingut gelangt nun zu einem weiteren Sieb (19), das die Schwelreststoffe bei einer kleineren Trennkorngröße, beispielsweise bei 1 mm, trennt. Eine Teilmenge des erhaltenen Überkorns (34), die Fraktion 2 bis 1 mm, wird nun zum Drehrohrofen (13) zur Bildung des Tauchbettes geführt. Die Restmenge wird in einer Zerkleinerungsvorrichtung (21) auf < 1 mm zerkleinert und zum Sieb (19) zurückgeführt.

Die auf diese Weise auf eine Korngröße von < 1 mm zerkleinerten Schwelreststoffe werden nun mit reinem Sauerstoff (33) gemeinsam tangential in einem Vergasungszyklon (22) eingedüst und dort zu einem hochwertigen Synthesegas (42) umgewandelt. Dieses Synthesegas gelangt anschließend in eine Kühl- und Reinigungsstufe (23) und kann dann weiteren Verwendungszwecken zugeführt werden. Die bei der Hochtemperatur-Vergasung verbleibende Schlacke verläßt aufgrund der hohen Temperatur im Vergasungszyklon diesen in schmelzflüssiger Form, was für eine Weiterverarbeitung, beispielsweise der Herstellung von Steinwolle (25), genutzt werden kann. Aufgrund des schmelzflüssigen Austrags der Schlacke wird nach ihrer Abkühlung eine Schlacke erhalten, in die vorhandene Schadstoffe wie beispielsweise Schwermetalle laugungsresistent eingebunden sind, so daß diese Schlacke problemlos deponiert werden oder als Baustoff Verwendung finden kann.

## Patentansprüche

1. Verfahren zur thermischen Verwertung von Abfallstoffen aus getrennten Sammlungen wie Hausmüll, Gewerbemüll, Altreifen, Kunststoffabfällen, Schlämme wie Klärschlamm oder dergleichen, wobei die Abfallstoffe in einer ersten thermischen Stufe in einem Drehrohrofen verschwelt werden und die bei der Schwelung erhaltenen Produkte zumindest teilweise weiter thermisch behandelt werden, dadurch gekennzeichnet, daß
a) die Schwelung in einem im Gleichstrom betriebenen direkt beheizten Drehrohrofen (13), der ein Tauchbett aus zurückgeführten feinkörnigen Schwelreststoffen (34) enthält, durchgeführt wird;
b) das bei der Schwelung erhaltene Schwelgas (40) einer thermischen Nachverbrennungsvorrichtung (26) zugeführt wird;
c) die bei der Schwelung erhaltenen Schwelreststoffe (41) einer mechanischen Aufbereitung zugeführt und nach Abtrennung einer Teilmenge (34) zur Tauchbettbildung des Drehrohrofens (13) in einem Vergasungszyklon (22) unter Zusatz von reinem Sauerstoff zu Synthesegas (42) umgewandelt werden.

2. Verfahren nach Anspruch 1, dadurch gekennzeichnet, daß die bei der Verbrennung der Schwelgase (40) anfallenden Verbrennungsgase einer Dampferzeugungsvorrichtung (27) zugeführt werden.

3. Verfahren nach Anspruch 1 oder 2, dadurch gekennzeichnet, daß die bei der Verbrennung der Schwelgase (40) anfallenden Verbrennungsgase einem Luftvorwärmer (28) zugeführt werden.

4. Verfahren nach Anspruch 1, 2 oder 3, dadurch gekennzeichnet, daß Teilmengen des erzeugten Synthesegases (37) zur Beheizung des Drehrohrofens (13) und der Nachverbrennungsvorrichtung (26) verwendet werden.

5. Verfahren nach Anspruch 1, 2, 3 oder 4, dadurch gekennzeichnet, daß die Temperatur des Drehrohrofens (13) zwischen 300 und 1.200 °C, vorzugsweise zwischen 450 und 600 °C, beträgt.

6. Verfahren nach Anspruch 1, 2, 3, 4 oder 5, dadurch gekennzeichnet, daß die Rückstände der Schwelreststoff-Vergasung in schmelzflüssiger Form aus dem Vergasungszyklon ausgetragen werden.

7. Anlage zur thermischen Verwertung von Abfallstoffen, insbesondere zur Durchführung des Verfahrens nach einem oder mehreren der vorhergehenden Ansprüche, gekennzeichnet durch folgende miteinander verbundene Anlagenbausteine:
a) mindestens eine Vorzerkleinerungsvorrichtung (12) zur Zerkleinerung grober Abfälle;
b) einen direkt beheizten Gleichstrom-Drehrohrofen (13) mit einem Tauchbett aus feinkörnigen, aufbereiteten Schwelreststoffen;
c) Vorrichtungen zur mechanischen Aufbereitung der Schwelreststoffe, wie Siebvorrichtungen (14, 17), Magnetscheider (15), Zerkleinerungsvorrichtungen (20, 21);
d) einen Zyklonvergaser (22) zur Umwandlung der aufbereiteten Schwelreststoffe in ein Synthesegas;
e) eine Nachverbrennungsvorrichtung (26) für das Schwelgas.

## Claims

1. Process for the thermal utilization of waste materials originating from different collections, such as household and industrial refuse, used tires, plastic waste, sludges like sewage sludge or the like, where the waste materials are subjected to low-temperature carbonization a rotary kiln during a first thermal stage and the products obtained by low-temperature carbonization are at least in part subjected to further thermal treatment, characterized in that
a) low-temperature carbonization is carried out in a directly heated rotary kiln (13) which is operated by the co-current principle and which includes a material layer made up of recycled, fine-grained residues (34) from low-temperature carbonization;
b) the gas (40) obtained from low-temperature carbonization is transferred to a thermal secondary-combustion device (26);
c) the residues (41) from low-temperature carbonization are directed to mechanical processing and - after separation of a portion (34) for forming the material layer in the rotary kiln (13) - are converted to synthesis gas (42) in a gasification cyclone (22) by the addition of pure oxygen.

2. Process in accordance with claim 1) above, characterized in that the combustion gases produced during combustion of the gases from low-temperature carbonization (40) are directed to a steam generating device (27).

3. Process in accordance with claims 1) or 2) above characterized in that the combustion gases produced during combustion of the gases from low-temperature carbonization (40) are routed to an air preheater (28).

4. Process in accordance with claims 1), 2) or 3) above characterized in that portions of the synthesis gas (37) produced are used for heating the rotary kiln (13) and the secondary-combustion device (26).

5. Process in accordance with claims 1), 2), 3) or 4) above characterized in that the temperature of the rotary kiln (13) ranges between 300 and 1 200°C, preferably between 450 and 600°C.

6. Process in accordance with claims 1), 2), 3), 4) or 5) characterized in that the residues from gasification of the remains from low-temperature carbonization are discharged from the gasification cyclone in liquid form.

7. Plant for thermal utilization of waste materials, in particular for realization of the process in accordance with one or several of the above claims, characterized in that that following plant components are connected with each other:
a) at least one primary comminution device (12) for size reduction of coarse refuse;
b) a directly heated co-current rotary kiln (13) with a material layer made up of fine-grained, processed residues from low-temperature carbonization;
c) devices for mechanical processing of the residues from low-temperature carbonization, such as screening appliances (14, 17), magnetic separator (15), size-reduction equipment (20, 21);
d) a cyclone gasifier (22) for converting the processed residues from low-temperature carbonization to a synthesis gas;
e) a secondary-combustion device (26) for the gas from low-temperature carbonization.

## Revendications

1. Procédé de traitement thermique de déchets en provenance des collectes sélectives d'ordures ménagères, de déchets industriels, de pneumatiques usagés, de déchets plastiques, de boues telles que les boues d'épuration ou similaires, où les déchets sont soumis au cours d'une première phase thermique à une carbonisation à basse température dans un four rotatif et où les produits obtenus par la carbonisation à basse température sont soumis au moins partiellement à un traitement thermique consécutif, caractérisé en ce que
a) la carbonisation à basse température a lieu dans un four rotatif (13) à chauffage direct, exploité en mode équicourant, comportant un lit d'immersion formé de résidus fins de basse carbonisation (34):
b) les gaz obtenus par la carbonisation à basse température (40) sont dirigés dans un dispositif de postcombustion thermique (26);
c) les résidus de la carbonisation à basse température (41) sont soumis à un traitement mécanique et après séparation d'une quantité partielle (34) destinée à former le lit d'immersion du four rotatif (13), transformés en gaz de synthèse (42) dans un cyclone de gazéification (22) sous ajout d'oxygène pur.

2. Procédé selon la revendication 1, caractérisé en ce que les gaz obtenus par la combustion des gaz de basse carbonisation (40) sont introduits dans un dispositif de production de vapeur (27).

3. Procédé selon la revendication 1 ou 2, caractérisé en ce que les gaz obtenus par la combustion des gaz de basse carbonisation (40) sont introduits dans un préchauffeur d'air (28).

4. Procédé selon la revendication 1, 2 ou 3, caractérisé en ce que des quantités partielles du gaz de synthèse (37) produit sont utilisées pour chauffer le four rotatif (13) et le dispositif de postcombustion (26).

5. Procédé selon la revendication 1, 2, 3 ou 4, caractérisé en ce que la température du four rotatif (13) se situe entre 300 et 1.200 °C, de préférence entre 450 et 600°C.

6. Procédé selon la revendication 1, 2, 3, 4 ou 5, caractérisé en ce que les résidus de la gazéification des résidus de basse carbonisation sont extraits sous forme liquide du cyclone de gazéification.

7. Installation de traitement thermique de déchets, notamment pour la réalisation du procédé selon une ou plusieurs des revendications ci-dessus, caractérisée par les éléments fonctionnels ci-après reliés entre eux:
a) au moins un dispositif de fragmentation primaire (12) pour la fragmentation des déchets grossiers;
b) un four rotatif à chauffage direct à équicourant (13) avec un lit d'immersion formé de résidus de basse carbonisation fins préparés;
c) dispositifs de préparation mécanique des résidus de basse carbonisation, tels que dispositifs de criblage (14, 17), séparateur magnétique (15), dispositifs de fragmentation (20, 21);
d) un gazéificateur à cyclone (22) pour transformer les résidus de basse carbonisation préparés en gaz de synthèse;
e) un dispositif de postcombustion (26) pour les gaz de basse carbonisation.
